# EUROPEAN PATENT APPLICATION

(11) **EP 2 996 061 A1**
(43) Date of publication of application: **16.03.2016**
(21) Application number: 15184906.4
(22) Date of filing: 11.09.2015
(51) Int. Cl.: G06F 21/55

(54) **SYSTEM AND METHOD FOR MONITORING DATA AND PROVIDING ALERTS**

(30) Priority: 12.09.2014 US 201414485581
(71) Applicant: SpectorSoft Corporation, Vero Beach, FL 32960 (US)
(72) Inventor: Cunningham, Andrew R., Murray, KY Kentucky 42071 (US); Dilliard, Aaron T., Vero Beach, FL Florida 32968 (US); Griffen, Christopher R., Sebastian, FL Florida 32958 (US); Li, Rong, Vero Beach, FL Florida 32966 (US); Motz, Russell W., Melbourne Beach, FL Florida 32951 (US); Park, Jeani, Sandy, UT Utah 84070 (US); Rebhan, Michael H., Vero Beach, FL Florida 32963 (US); Smith, David J., Vero Beach, FL Florida 32966 (US)
(74) Representative: Westphal, Mussgnug & Partner Patentanwälte mbB

(57) **Abstract**

A method for monitoring data and providing alerts is disclosed. In particular, the method may including monitoring and capturing data associated with a user of a device. Additionally, the method may include determining if a portion of the captured data matches a condition for triggering an alert. If the portion of the data is determined to match the condition for triggering the alert, the method may include storing the alert data and transmitting a notification to a client service to indicate the triggering of the alert. The method, by utilizing the client service, may include retrieving the alert data associated with the portion of the data. Furthermore, the method may include transmitting the alert including the alert data to a notification server for processing. The alert data may be configured to not include the portion of the data that is determined to match the condition for triggering the alert.

## Description

### FIELD OF THE INVENTION

The present application relates to technologies for monitoring users and generating alerts in response to various conditions, and more particularly, to systems and methods for monitoring data and providing alerts.

### BACKGROUND

In today's society, users regularly utilize smartphones, computing devices, and other communications-based technologies to perform work-related tasks, to place and receive phone calls, access various types of content and services, perform a variety of functions, or a combination thereof. Based on the ever-increasing capabilities of such devices, it has become substantially easier for users to steal company intellectual property, commit fraud, access confidential data and information, commit malicious actions, or a combination thereof. Such users are often able to cause substantial data and economic losses to companies that are spending an ever-increasing amount of financial resources to stay competitive in today's marketplace. As a result, companies face the daunting challenge of having to choose between protecting their highly-valuable intellectual property and preventing fraud, and intruding on an employee's privacy.

Currently, many companies employ various types of monitoring software, information technology personnel, security personnel, and other countermeasures to counteract such data breaches and malicious activity. Notably, however, current monitoring software often requires harvesting tremendous amounts of data from each monitored device and storing all of the harvested data on remote servers so that network administrators or other authorized individuals can further analyze the data to determine if malicious activity is occurring. As a result, such software often requires the investment of substantial financial resources to maintain such remote servers that are able to handle the large volumes of data being harvested. Additionally, by harvesting such large volumes of data, the limited network resources of the companies are often strained to accommodate the monitoring and harvesting process. Furthermore, current countermeasures often require significant intrusions into an employee's privacy.

### SUMMARY

A system and accompanying methods for monitoring data and providing alerts is provided herewith. In particular, the system and methods may enable a reconnaissance (recon) mode that involves monitoring and recording user activity and data locally on a device of a monitored user instead of having to transmit the recorded user activity to a remote server for analysis. By monitoring and recording user activity locally on the device itself, the system and methods may ensure that the recorded user activity is private and not accessible by any unauthorized user-even if that includes the user whose user activity is being recorded. Additionally, the system and methods may include scanning the recorded activity to determine if a portion of the recorded user activity matches a condition for triggering an alert. For example, the condition may be a keyword, a change in user behavior, a change in user sentiment, a speech pattern, a frequency of communication, any condition, or a combination thereof.

If a portion of the recorded activity is determined to match the condition, the system and methods may include storing alert data associated with the recorded activity in a storage of the device. The system and methods may then include transmitting a notification to a client service, which may be configured to retrieve the stored alert data from the storage. Once the alert data is retrieved, the system and methods may include transmitting an alert including the alert data to a notification server for further processing. Notably, the alert including the alert data may be configured to not include the actual recorded activity that matches the condition that triggered the alert. Once the alert including the alert data is received by the notification server, the alert data may be transferred to a database for storage. The system and methods may transmit the alert including the alert data to a network administrator, forensic investigator, human resource manager, or other authorized individual so that he or she may perform a more detailed investigation of the employee and the employee's activity. In certain circumstances, the system and methods may include enabling the authorized individual to activate a detail mode, which may enable the authorized individual to obtain the actual recorded user activity and data from the device of the user so that an even further analysis may be performed.

In one embodiment, a system for monitoring data and providing alerts is disclosed. The system may include a memory that stores instructions and a processor that executes the instructions to perform various operations of the system. The system may perform operations that include monitoring data associated with a user of a device and capturing the data associated with the user of the device. Additionally, the system may perform an operation that includes determining if a portion of the data matches a condition for triggering an alert. If the portion of the data is determined to match the condition for triggering the alert, the system may perform an operation that includes storing the alert data associated with the portion of the data. Also, the system may perform an operation that includes transmitting a notification to a client service that advises the client service of the triggering of the alert. The system, by utilizing the client service, may perform an operation that includes retrieving the alert data associated with the portion of the data. Furthermore, the system may perform an operation that includes transmitting the alert including the alert data to a notification server for processing. The alert data may be configured to not include the portion of the data that is determined to match the condition for triggering the alert.

In another embodiment, a method for monitoring data and providing alerts is disclosed. The method may include utilizing a memory that stores instructions, and a processor that executes the instructions to perform the various functions of the method. The method may include monitoring data associated with a user of a device and capturing the data associated with the user of the device. Additionally, the method may include determining if a portion of the data matches a condition for triggering an alert. If the portion of the data is determined to match the condition for triggering the alert, the method may include storing the alert data associated with the portion of the data. The method may also include transmitting, to a client service, a notification that advises the client service of the triggering of the alert. By utilizing the client service, the method may include retrieving the alert data associated with the portion of the data. Furthermore, the method may include transmitting the alert including the alert data to a notification server for processing, wherein the alert data does not include the portion of the data that is determined to match the condition for triggering the alert.

According to yet another embodiment, a computer-readable device having instructions for monitoring data and providing alerts is provided. The computer instructions, which when loaded and executed by a processor, may cause the processor to perform operations including: monitoring data associated with a user of a device; capturing the data associated with the user of the device; determining if a portion of the data matches a condition for triggering an alert; storing, if the portion of the data is determined to match the condition for triggering the alert, alert data associated with the portion of the data; transmitting a notification to a client service, wherein the notification advises the client service of the triggering of the alert; retrieving, by utilizing the client service, the alert data associated with the portion of the data; and transmitting the alert including the alert data to a notification server for processing, wherein the alert data does not include the portion of the data that is determined to match the condition for triggering the alert.

These and other features of the systems and methods for monitoring data and providing alerts according to the present disclosure are described in the following detailed description, drawings, and appended claims.

### BRIEF DESCRIPTION OF THE DRAWINGS

Figure 1 is a schematic diagram of a system for monitoring data and providing alerts according to an embodiment of the present disclosure.
Figure 2 is a schematic diagram illustrating the communication of alert data between a monitored device and a notification server of the system Figure 1.
Figure 3 is a flow diagram illustrating a sample method for monitoring data and providing alerts according to an embodiment of the present disclosure.
Figure 4 is a flow diagram illustrating a sample method for obtaining new alert definitions according to an embodiment of the present disclosure.
Figure 5 is a schematic diagram of a machine in the form of a computer system within which a set of instructions, when executed, may cause the machine to perform any one or more of the methodologies or operations of the systems and methods for monitoring data and providing alerts.

### DETAILED DESCRIPTION OF THE INVENTION

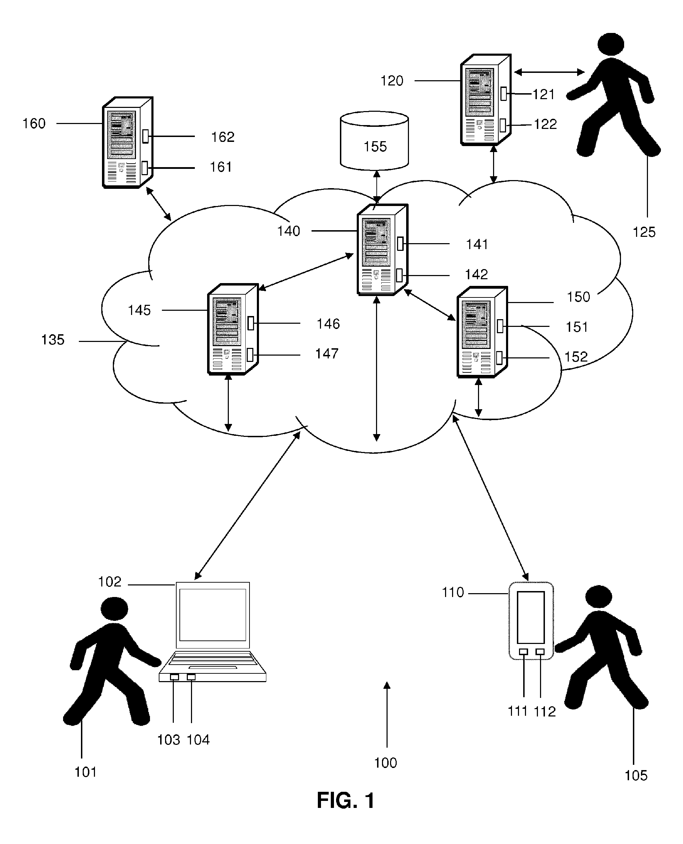

A system 100 and accompanying methods for monitoring data and providing alerts are disclosed, as shown in Figures 1-5. In particular, the system 100 and methods allow for a reconnaissance (recon) mode that involves monitoring and recording user activity and data locally on devices 102, 110 of monitored user 101, 105 instead of having to transmit the recorded user activity to a remote server for analysis. By monitoring and recording user activity locally on the devices 102, 110, the system 100 and methods may ensure that the recorded user activity is private and not accessible by any unauthorized user-even if that includes the users 101, 105 whose user activity is being recorded. Additionally, the system 100 and methods may include scanning the recorded activity to determine if a portion of the recorded user activity matches a condition for triggering an alert. As an example, the condition may include, but is not limited to, a keyword, a change in user behavior, a change in user sentiment, a speech pattern, a frequency of communication, any condition, or a combination thereof.

If a portion of the recorded activity is determined to match the condition, the system 100 and methods may include storing alert data associated with the recorded activity in memories 103, 111 of the devices 102, 110 respectively. The system 100 and methods may then include transmitting a notification to a client service, which may be configured to retrieve the stored alert data from the memories 103, 111. Once the alert data is retrieved, the system 100 and methods may include transmitting an alert including the alert data to a notification server 120 for further processing. Notably, the alert including the alert data may be configured to not include the actual recorded activity that matches the condition that triggered the alert. Once the alert including the alert data is received by the notification server 120, the alert data may be transferred to a database 155 for storage. The system 100 and methods may transmit the alert including the alert data to a network administrator, forensic investigator, human resource manager, or other authorized individual 125 so that he or she may perform a more detailed investigation of the users' 101, 105 activity. In certain circumstances, the system 100 and methods may include enabling the authorized individual 125 to activate a detail mode, which may enable the authorized individual 125 to obtain the actual recorded user activity and data from the devices 102, 110 of the users 101, 105 so that an even further analysis may be conducted to determine if unauthorized activity is occurring.

As shown in Figure 1, a system 100 for monitoring data and providing alerts is disclosed. The system 100 may be configured to support, but is not limited to supporting, communications services, cloud computing services, voice-over-internet protocol services (VoIP), software as a service (SaaS) applications, gaming applications and services, productivity applications and services, mobile applications and services, and any other computing applications and services. The system 100 may include a user 101 that may utilize device 102 to access and interact with content, data, and services to perform a variety of functions in the system 100. For example, the user 101 may utilize device 102 to access internet web pages, place or receive phone calls, send or receive electronic messages, conduct chat sessions, perform work, send or receive data, or perform any other desired operations. Additionally, the system 100 may also include a user 105 that may utilize device 110 to access and interact with content, data, and services to perform a variety of functions in the system 100 much like user 101. In certain embodiments, the system 100 may be configured to monitor both users' 101, 105 activities on their corresponding devices 102, 110. Also, in certain embodiments, the users 101, 105 may be employees of a company that controls the system 100. The system 100 may also include an authorized individual 125 that may work for the company that controls the system 100. In certain embodiments, the authorized individual 125 may be a network administrator, forensic investigator, human resource manager, or other authorized individual that may have administrative access and control of the various services, functions, content, and resources provided by the system 100, and access to data and information associated with any device or user that interacts with the system 100.

In certain embodiments, the devices 102, 110 may be, but are not limited to, computers, servers, mobile devices, smartphones, computer tablets, phablets, or any other computing devices. In one embodiment, the device 102 may include a memory 103 that includes instructions, and a processor 104 that executes the instructions from the memory 103 to perform various operations that are performed by the device 102. The processor 104 may be hardware, software, or a combination thereof. Illustratively, device 102 is shown as a laptop computer in Figure 1. Much like device 102, the device 110 may include a memory 111 that includes instructions, and a processor 112 that executes the instructions from the memory 111 to perform various operations that are performed by the device 110. The processor 112 may be hardware, software, or a combination thereof. Illustratively, device 110 is shown as a smartphone in Figure 1.

The user 101 and the user 105 may utilize the device 102 and the device 110, respectively, to access and interact with data, content, and services inside or outside the system 100. For example, the users 101, 105 may utilize the devices 102, 110 to access and obtain various types of content and services, such as, but not limited to, video content, audio content, web content, text content, or any combination thereof. For example, the content may include company proprietary information, trade secrets, or other non-public information. Additionally, users 101 and 105 may utilize the device 102 and the device 110 to perform a variety of other tasks and functions. For example, the users 101, 105 may even utilize the devices 102, 110 to communicate with each other by placing phone calls, conducting chat sessions, sending instant messages, sending or receiving data, or performing any other types of communications with each other using the devices 102, 110. In certain embodiments, the devices 102, 110 may include a software application that may be a cloud-based application, gaming application, an internet-based application, a browser application, a mobile application, a productivity application, a video application, a music application, a social media application, any other type of application, or a combination thereof, that may be utilized to access and interact with content, data, and services of the system 100. In certain embodiments, at least a portion of the software application may be configured to execute directly on the devices 102, 110, however, in other embodiments, the software application may be configured to execute on the other devices and components in the system 100.

In addition to including the software application, the devices 102, 110 may also include a capture agent, which may be software program that is configured to capture data associated with the user activities of the users 101, 105, data associated with the users 101, 105, data associated with the devices 102, 110, the actual user activities, any other type of data, or any combination thereof. For example, the capture agent may be configured to capture content that user 101 has accessed by using a browser application installed on the device 102, capture an email message that was sent using an email client on the device 102, or capture the contents of a chat session that the user 101 is conducting using the device 102. In one embodiment, the capture agent may be inserted into the software application that the user is using to access or interact with content, data, or services of the system 100 so that the capture agent may readily capture the data associated with the user. In certain embodiments, the capture agent may reside on the devices 102, 110, however, in other embodiments, the capture agent may also reside in other selected components of the system 100.

In certain embodiments, the devices 102, 110 may also include a recorder, which may be an application that may be configured to receive the data captured by the captured agent. Additionally, the recorder may be configured to relay the captured data corresponding to user 101 to the memory 103 or to another storage of the device 102 for storage, and relay the captured data corresponding to user 105 to the memory 111 or to another storage of the device 110 for storage. In certain embodiments, the recorder may reside on the devices 102, 110, however, in other embodiments, the recorder may also reside in other selected components of the system 100. Once the captured data is stored on the devices 102 and 110 respectively, the captured data may be stored indefinitely, for a predetermined amount of time, or for a random amount of time. The preferences for storing may be set by the authorized individual 125 or by the system 100 itself. Also, in certain embodiments, the captured data may be encrypted, obfuscated, or otherwise protected from being accessed by anyone except a designated authorized user, such as authorized individual 125. The authorized individual 125 may have access to a decryption key, other decryption information, or a password that may be utilized to decrypt and access the encrypted data.

In some embodiments, the devices 102, 110 may also include a scanner program, which may be configured to analyze the captured data to determine if at least a portion of the captured data matches a condition for triggering an alert. A condition for triggering an alert may include, but is not limited to, a keyword, a behavior pattern, a user sentiment (e.g. positive or negative language, tone, or behavior), a sentence structure, a grammar condition, a speech pattern, a type of communication, a frequency of communication, a device type, a data type, or a combination thereof. If the scanner determines that the portion of the data does not match the condition, the scanner can continue to analyze data as it comes in. If, however, the scanner determines that the portion of the data does match a condition for triggering an alert, alert data may be generated and stored on the devices 102, 110. In certain embodiments, alert data may include, but is not limited to, an identification of the alert triggered, an identification of the condition, a time stamp associated with the captured user activity and data, an identification of the user, a data type associated with the portion of the data, a frequency of the condition for triggering the alert, or a combination thereof. The alert data may have a format that is specified by the authorized individual 125 or by a device in the system 100.

The devices 102, 110 may also have access to or may include a client service, which may be configured to receive a notification from the system 100 that indicates that a portion of the data that has been captured matches a condition for triggering an alert. In certain embodiments, the client service may be any service or process that may be configured to execute on the user devices 102, 110, or other appropriate device, that may be utilized to allow the user devices 102, 110 to communicate with the notification server 120. For example, the client service may include, but is not limited to, a module, a sub-thread, or any type of compiled output attached to a process. Once the notification has been received by the client service, the client service may be configured to retrieve the alert data stored on the devices 102, 110, and the alert including the alert data may be transmitted to notification server 120 for further processing. If the transmission is not successful, the system 100 may wait for a selected or random time period before attempting to retransmit the alert including the alert data to the notification server 120.

The notification server 120, which may receive the alert including the alert data may include a memory 121 that stores instructions, and a processor 122 that executes the instructions from the memory 121 to perform various operations that are performed by the notification server 120. The processor 122 may be hardware, software, or a combination thereof. Illustratively, the notification server 120 is a server in Figure 1, however, in other embodiments, the notification server 120 may be a computer, a laptop device, a mobile device, or any other suitable device. The notification server 120 may be configured to transmit alerts including alert data to the database 155 for storage and to the authorized individual 125 or to selected devices in the system 100. Additionally, the notification server 120 may be configured to serve as an intermediary device that separates the authorized individual 125 from the users 101, 105. In certain embodiments, the notification server 120 may reside within the communications network 135 utilized by the users 101, 105, or outside the communications network 135. Additionally, the notification server 120 may be configured to transmit alerts including alert data for storage in database 155, and may be configured to provide the alerts including the alert data to the authorized individual 125 or a selected device for further analysis.

The functionality of the system 100 may be supported and executed by using any combination of the servers 140, 145, and 150 in the communications network 135 or outside of the communications network 135. In one embodiment, the server 140 may include a memory 141 that includes instructions, and a processor 142 that executes the instructions from the memory 141 to perform various operations that are performed by the server 140. Additionally, the server 145 may include a memory 146 that includes instructions, and a processor 147 that executes the instructions from the memory 146 to perform various operations that are performed by the server 145. Furthermore, the server 150 may include a memory 151 that includes instructions, and a processor 152 that executes the instructions from the memory 151 to perform various operations that are performed by the server 150. The processors 142, 147, and 152 may be hardware, software, or a combination thereof. In certain embodiments, the servers 140, 145, and 150 may be network servers, routers, gateways, computers, mobile devices or any other suitable computing device.

The communications network 135 of the system 100 may be configured to link each of the devices in the system 100 to one another, and be configured to transmit, generate, and receive any information and data traversing the system 100. In one embodiment, the communications network 135 may include any number of additional servers in addition to the server 140, the server 145, and the server 150. The communications network 135 may also include and be connected to a cloud computing network, a wireless network, an ethernet network, a satellite network, a broadband network, a cellular network, a private network, a cable network, the Internet, an internet protocol network, a content distribution network, or any combination thereof. In certain embodiments, the communications network 135 may be part of a single autonomous system that is located in a particular geographic region, or be part of multiple autonomous systems that span several geographic regions.

The database 155 of the system 100 may be utilized to store and relay information that traverses the system 100, cache content that traverses the system 100, store data about each of the devices in the system 100 and perform any other typical functions of a database. In one embodiment, the database 155 may be connected to or reside within the communications network 135. Additionally, the database 155 may include a processor and memory or be connected to a processor and memory to perform the various operations associated with the database 155. In certain embodiments, the database 155 may be connected to servers 140, 145, and 150, server 160, notification server 120, device 102, device 110, or any combination thereof. The database 155 may also store communications traversing the system 100, store alert data, store the captured data, store data associated with the users 101, 105, store alert definitions that define each type of alert, store user profiles for each user, store data indicating user behavior patterns, network usage patterns, user sentiment patterns, grammar patterns, an amount of alerts associated with a specific user, store any information traversing the system 100, or any combination thereof. Furthermore, the database 155 may be configured to process queries sent to it by any device in the system 100 or otherwise.

Operatively, the system 100 may monitor data and provide alerts in the following exemplary manner. Initially, the user 101 and the user 105 may log into or otherwise initiate operation of their respective devices 102 and 110. Once logged in, each user 101, 105 may perform various user activities on their respective devices 102, 110. For example, the user activities may include creating and sending a new email, participating in a chat session, creating and editing a new digital document, accessing various types of applications, accessing web content, or any other type of activity that may be conducted using the devices 102, 110. The system 100, which may be in recon mode, may involve using capture agents of the devices 102, 110 that may acquire user activity data associated with the user activities and transmit the user activity data to the recorder. The recorder may relay the captured user activity data to the respective memories 103, 111 of the devices 102, 110 so that the user activity data may be stored on the devices 102, 110. Once the captured data is stored on the devices 102 and 110 respectively, the captured data may be stored indefinitely, for a predetermined amount of time, or for a random amount of time. The preferences for storing may be set by the authorized individual 125 or by a selected device of the system 100.

Once the user activity data is stored, the scanners of the user devices 102, 110 may be configured to analyze the captured data to determine if at least a portion of the captured data matches a condition for triggering an alert. If the scanners determine that the portion of the user activity data does not match the condition, the scanners can continue to analyze user activity data as it comes in to the scanners. If, however, the scanners determine that a portion of the user activity data does match a condition for triggering an alert, alert data associated with the user activity data may be generated and stored on the devices 102, 110. For example, the alert data may include an identification of the alert triggered, an identification of the condition, a time stamp associated with the captured user activity and data, an identification of the user, a data type associated with the portion of the data, a frequency of the condition for triggering the alert, or a combination thereof. In certain embodiments, that alert data may be stored on storages of the user devices 102, 110, such as memories 103 and 111 respectively.

Once the alert data is stored, system 100 may transmit a notification to a client service that advises the client service of the triggered alert. The client service may be any service or process that may execute on the user devices 102, 110 or other appropriate device that may be utilized to allow the user devices 102, 110 to communicate with the notification server 120. For example, the client service may include, but is not limited to, a module, a sub-thread, or any type of compiled output attached to a process. At this point, the system 100 may retrieve, from the storages, the alert data associated with the portion of the data that matches the condition for triggering the alert. In certain embodiments, the alert data may be retrieved by a program or process running on the devices 102, 110, such as the client service or another process. Once the alert data is retrieved, the alert including the alert data may be transmitted to the notification server 120 for further processing. Notably, in an embodiment, while the system is in recon mode, only the alert data associated with the user activity data may be transmitted to the notification server 120. In such an embodiment, the actual user activity and data stored on the user devices 102, 110 may remain only on the user devices 102, 110, and may not be sent to the notification server 120 or to another device in the system 100. As a result, recon mode may provide substantial privacy with respect to the captured user activity data for each of the users' 101, 105.

The notification server 120 may transmit the alert including the alert data to the database 155 for storage and transmit the alert including the alert data to the authorized individual 125, a selected device, or both, to conduct a further analysis on the user activity data. In certain embodiments, the alert including the alert data may be transmitted to the database 155, to the authorized individual 125, to a selected device of the system 100, or a combination thereof, by utilizing the notification server 120. If the authorized individual 125, selected device, or both, determine that further investigation with regard to the user activity is warranted, the system 100 may enable a detail mode of the system 100. The detail mode may be enabled by the authorized individual 125, by a selected device of the system 100, or both. For example, the detail mode may be enabled by selecting an option via a user interface of a device that the authorized individual 125 is using, and relaying this information from the interface to the notification server 120. The detail mode information may then be transmitted to the devices 102, 110 when the devices 102, 110 connect to the system 100 or at another selected time.

While in detail mode, the system 100 may allow the authorized individual 125 or selected device of the system 100, to obtain all of the actual captured user activity and data from the user devices 102, 110 for further analysis. In certain embodiments, the user activity data may obtained from the user devices 102, 110 by utilizing the notification server 120. Once the actual user activity and data is obtained, the authorized individual 125, selected device, or both, may analyze the activity and data to determine if any countermeasures should be employed against the users 101, 105 or otherwise. Such countermeasures, may include, but are not limited to, preventing access to the communications network 135, preventing access to the system 100, prevent access to any of the other devices in the system 100, deleting data on the user devices 102, 110, electronically locking the devices 102, 110, or any other desired countermeasure. The user activity and data may be aggregated from many such devices 102, 110 so as to create a history view of user activity across the system 100. This may enable the authorized individual 125 or selected device to group people based on what network resources they use, their activities, the type of content and applications they use, their behavioral patterns, their speech patterns, or any other metric. Based on the historical view of the aggregate data, the authorized individual 125 or selected device may readily mark or suppress user activity that falls outside an acceptable standard deviation from the historical data.

Notably, as shown in Figure 1, the system 100 may perform any of the operative functions disclosed herein by utilizing the processing capabilities of server 160, the storage capacity of the database 155 or any other component of the system 100 to perform the operative functions disclosed herein. The server 160 may include one or more processors 162 that may be configured to process any of the various functions of the system 100. The processors 162 may be software, hardware, or a combination of hardware and software. Additionally, the server 160 may also include a memory 161, which stores instructions that the processors 162 may execute to perform various operations of the system 100. For example, the server 160 may assist in processing loads handled by the various devices in the system 100, such as, but not limited to, monitoring data associated with the users 101, 105 of the devices 102, 110, capturing the data, determining if a portion of the captured data matches a condition for triggering an alert, storing the portion of the data that is determined to match the condition for triggering the alert, transmitting notifications to a client service or other process, retrieving alert data associated with the captured data, transmitting and generating alerts including the alert data to the notification server 120, and performing any other suitable operations conducted in the system 100 or otherwise. In one embodiment, multiple servers 160 may be utilized to process the functions of the system 100. The server 160 and other devices in the system 100, may utilize the database 155 for storing data about the devices in the system 100 or any other information that is associated with the system 100. In one embodiment, multiple databases 155 may be utilized to store data in the system 100.

Although Figure 1 illustrates specific example configurations of the various components of the system 100, the system 100 may include any configuration of the components, which may include using a greater or lesser number of the components. For example, the system 100 is illustratively shown as including a device 102, a device 110, a notification server 120, a communications network 135, a server 140, a server 145, a server 150, a server 160, and a database 155. However, the system 100 may include multiple devices 102, multiple devices 110, multiple notification servers 120, multiple communications networks 135, multiple servers 140, 145, 150, and 160, multiple databases 155, or any number of any of the other components in the system 100. Furthermore, in one embodiment, substantial portions of the functionality and operations of the system 100 may be performed by other networks and systems that may be connected to system 100.

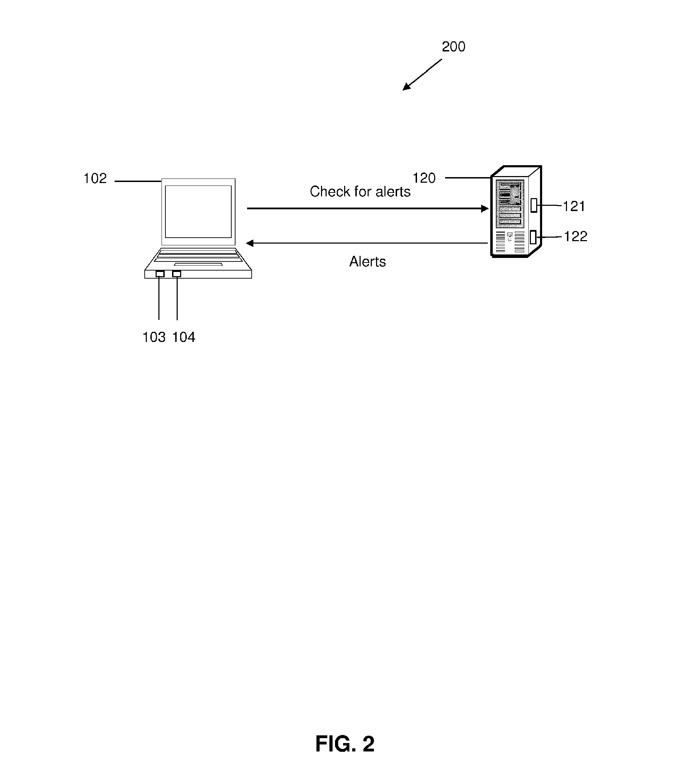

Referring now also to Figure 2, a diagram 200 illustrating the communication of alert data between user device 102 and the notification server 120 is shown. Periodically or at other intervals, the user device 102 may poll the notification server 120 to determine whether updated or new alert definitions are available. If an updated or new alert definition is available, the notification server 120 may transmit the updated or new alert definitions to the user device 102 so that the alert definitions on the user devices 102 are current. In certain embodiments, an alert definition may constitute the conditions that may trigger an alert corresponding to the definition.

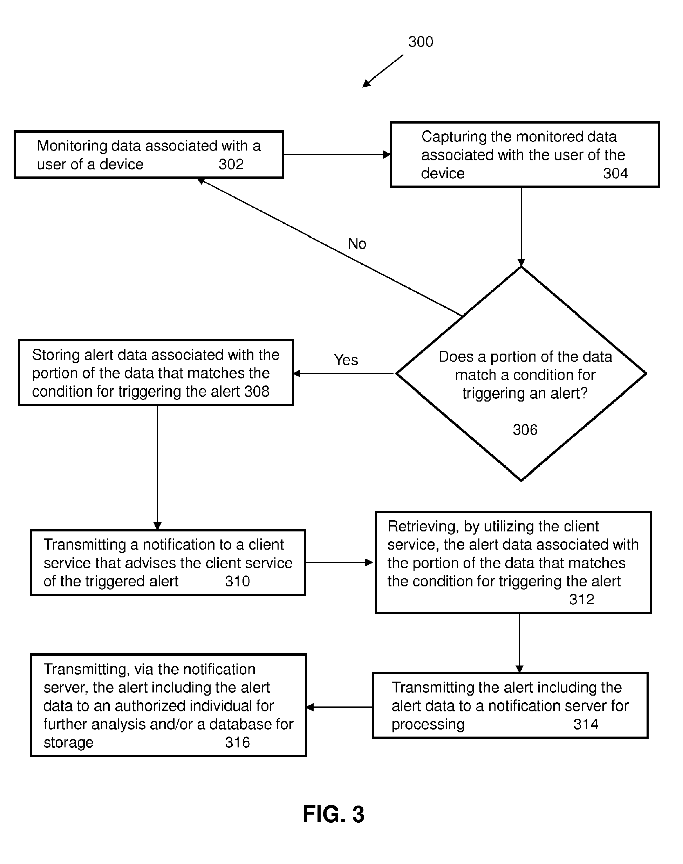

As shown in Figure 3, an exemplary method 300 for monitoring data and providing alerts is schematically illustrated, and may include, at step 302, monitoring, such as during a recon mode, user activity and data associated with a user of a device, such as devices 102, 110. The user activity may, for example, include the sending or receiving of an email message, instant message, web content, chat messages, digital documents, or any other kind of activity that may be performed on the user devices 102, 110. In certain embodiments, the monitoring may be performed by the devices 102, 110, the notification server 120, the authorized individual 125, the servers 140, 145, 150, 160, any combination thereof, or by any other appropriate device. For example, the monitoring may be performed using one or more programs on the devices 102, 110 themselves.

At step 304, the method 300 may include capturing the monitored user activity and data associated with the user of the device. In certain embodiments, the capturing of the monitored user activity and data may be performed by the devices 102, 110, the notification server 120, the authorized individual 125, the servers 140, 145, 150, 160, any combination thereof, or by any other appropriate device. In a preferred embodiment, the capturing of the monitored user activity and data may be performed by a capture agent program executing on the device of the user.

At step 306, the method 300 may include determining if a portion of the captured user activity and data matches a condition for triggering an alert. In certain embodiments, the determining may be performed by the devices 102, 110, the servers 140, 145, 150, 160, any combination thereof, or by any other appropriate device. In a preferred embodiment, the determining may be performed by a scanner program or other program executing on the devices 102, 110. If the portion of the captured user activity and data does not match the condition for triggering the alert, the method 300 may include reverting back to steps 302 and 304 of the method 300 to continue monitoring and capturing user activity data until a portion of captured data matches the condition for triggering the alert. If, however, the portion of the captured user activity and data does match the condition for triggering the alert, the method 300 may include, at step 308, storing alert data associated with the portion of the data that matches the condition for triggering the alert. In certain embodiments, the alert data may include, but is not limited to, an identification of the alert triggered, an identification of the condition, a time stamp associated with the captured user activity and data, an identification of the user, a data type associated with the portion of the data, a frequency of the condition for triggering the alert, or a combination thereof. In certain embodiments, that alert data may be stored on a storage of the user devices 102, 110, the database 155, or any other appropriate device.

Once the alert data is stored, the method 300 may include, at step 310, transmitting a notification to a client service that advises that client service of the triggered alert. The client service may be any service or process that may execute on the user devices 102, 110 or other appropriate device that may be utilized to allow the user devices 102, 110 to communicate with the notification server 120. For example, the client service may include, but is not limited to, a module, a sub-thread, or any type of compiled output attached to a process. In certain embodiments, the notification may be transmitted by using programs on the user devices 102, 110, the notification server 120, the servers 140, 145, 150, 160, any combination thereof, or by any other appropriate device.

At step 312, the method 300 may include retrieving the alert data associated with the portion of the data that matches the condition for triggering the alert. In certain embodiments, the alert data may be retrieved by a program or process running on the devices 102, 110, such as the client service or another process, the servers 140, 145, 150, 160, any combination thereof, or by any other appropriate device. After the alert data is retrieved, the alert including the alert data may be transmitted to the notification server 120 for further processing. Notably, in a preferred embodiment, only the alert data associated with the user activity and data is transmitted to the notification server while the system is in recon mode. In such an embodiment, the actual user activity and data stored on the user devices 102, 110 may remain only on the user devices 102, 110, and may not be sent to the notification server 120 or to another device in the system 100. As a result, recon mode may serve to ensure a high level of privacy with respect to captured user activity and data for each of the users' 101, 105.

At step 316, the method 300 may include transmitting the alert including the alert data to the database 155 for storage and transmitting the alert including the alert data to the authorized individual 125, a selected device, or both, to conduct a further analysis to determine if the user activity warrants further investigation. In certain embodiments, the alert including the alert data may be transmitted to the database, to the authorized individual 125, to the selected device of the system 100, or a combination thereof, by utilizing the notification server 120 or any other appropriate device in the system 100. If the authorized individual 125, selected device, or both determine that further investigation with regard to the user activity is warranted, the method 300 may include enabling a detail mode of the system 100. The detail mode may be enabled by the authorized individual 125, by a selected device of the system 100, or both. For example, the detail mode may be enabled by selecting an option via a user interface of a device that the authorized individual 125 is using and relaying this information from the interface to the notification server 120. The detail mode information may then be transmitted to the devices 102, 110 when the devices 102, 110 connect to the system 100 or at another selected time.

In detail mode, the system 100 may allow the authorized individual 125 or selected device of the system 100, to obtain all of the actual captured user activity and data from the user devices 102, 110 for further analysis. In certain embodiments, the user activity and data may obtained from the user devices 102, 110 by utilizing the notification server 120. The data obtained may be data that has been stored in the devices 102, 110 for any selected or random period of time. Once the actual user activity and data is obtained, the authorized individual 125, selected device, or both, may analyze the activity and data to determine if countermeasures should be employed. Such countermeasures, may include, but are not limited to, preventing access to the communications network 135, preventing access to the system 100, prevent access to any of the other devices in the system 100, deleting data on the user devices 102, 110, electronically locking the devices 102, 110, or any other desired countermeasure. The user activity and data may be aggregated from many such devices 102, 110 so as to create a historical view of user activity across the system 100. This may enable the authorized individual 125 or selected device to group people based on what network resources they use, their activities, the type of content and applications they use, their behavioral patterns, their speech patterns, or any other metric. Based on the historical view of the aggregate data, the authorized individual 125 or selected device may easily flag or suppress user activity that falls outside an acceptable standard deviation from the historical data.

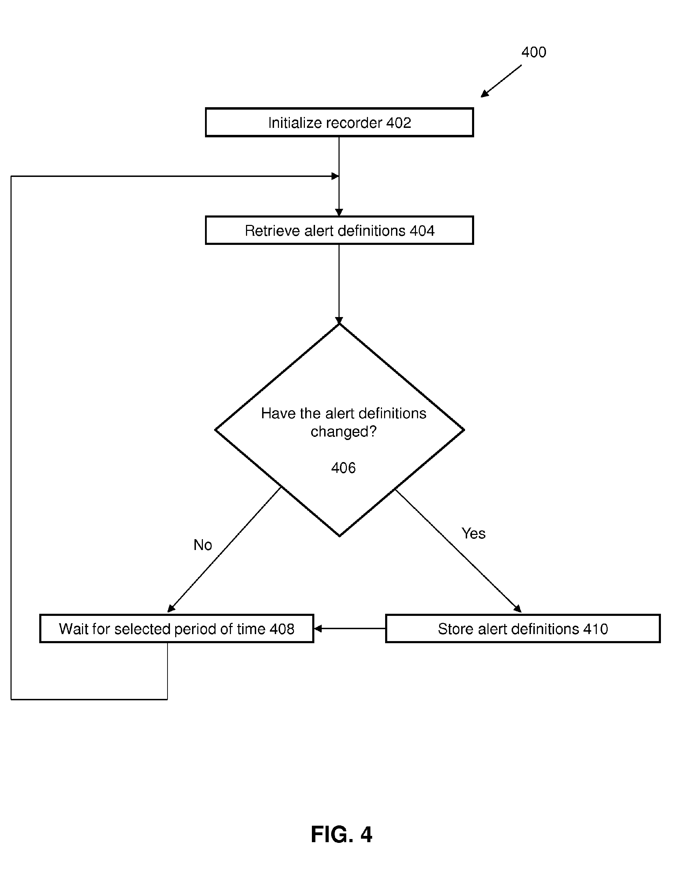

As shown in Figure 4, an exemplary method 400 for obtaining alert definitions is schematically illustrated, and may include, at step 402, initializing the recorder of a monitored device, such as user devices 102, 110. In certain embodiments, the initialization may be performed by utilizing the devices 102, 110, the notification server 120, the authorized individual 125, the servers 140, 145, 150, 160, any combination thereof, or by any other appropriate device. At step 404, the method 400 may include retrieving alert definitions associated with one or more alerts. In certain embodiments, the alert definitions may be retrieved from the database 155, the notification server 120, the servers 140, 145, 150, 160, any combination thereof, or by any other appropriate device. Once the alert definitions are retrieved, the method 400 may include, at step 406, determining if the alert definitions have changed as compared to previously stored alert definitions that exist for the previous alerts, if the alert definitions include definitions for new alerts, or combination thereof. In certain embodiments, the determination as to whether the alert definitions have changed or if there are new alert definitions for new alerts may be performed by utilizing the devices 102, 110, the notification server 120, the servers 140, 145, 150, 160, any combination thereof, or by any other appropriate device. In certain embodiments, an alert definition may constitute what conditions will trigger the corresponding alert. For example, an alert definition may indicate that if the keyword, "hack," is detected in the system 100, then a corresponding alert should be triggered.

If the alert definitions are determined to not have changed in comparison to previously stored alert definitions for alerts and if the alert definitions do not include new definitions for new alerts, the method 400 may include, at step 408, waiting for a period of time before reverting to step 404 to retrieve alert definitions again. The waiting period may be for a selected predetermined time period or a random time period. In certain embodiments, the waiting may be performed by the devices 102, 110, or by any other appropriate device. If, however, the alert definitions are determined to have changed in comparison to previous alert definitions for alerts, the alert definitions are determined to include new alert definitions for new alerts, or both, the method 400 may include storing the retrieved alert definitions at step 410. In certain embodiments, the retrieved alert definitions may be stored in devices 102, 110, or in any other appropriate device. Once the alert definitions have been stored, the method 400 may include proceeding to step 408 to wait for a period of time before reverting to step 404 to retrieve alert definitions again. The method 400 may be repeated as many times as necessary so that alert definitions may reflect the most recently updated version of alert definitions for a given set of alerts. Notably, the methods 300, 400 disclosed herein may incorporate any of the additional functionality and features described in the present disclosure for the system 100, and is not intended to be limited to the description provided herewith.

Notably, the system 100 and methods described herein may incorporate additional features and functionality. In one embodiment, the functions of the capture agent, recorder, scanner and client service may be combined into a single program or any combination of programs. Additionally, in one embodiment, the recon mode and detail mode may be configured for each individual user 101, 105, such as on a per-machine basis. For example, user 101 may be monitored in recon mode, while user 105 is simultaneously monitored in detail mode. The modes for monitoring may be switched for each user 101, 105 without affecting any other user. Also, in certain embodiments, detail mode may include sending screenshots, email, chat conversations, web site identifiers, and the like to the authorized individual 125 or selected device for further analysis.

In other embodiments, the recorder applications of the user devices 102, 110 may be notified of changes to conditions for triggering alerts, such as via the notification server 120. The authorized individual 125 or a selected device of the system 100 may change the conditions for triggering the alert and push these updates through the notification server 120. The user devices 102, 110 may request the updates from the notification server 120 through the use of an asynchronous message or through other types of communications. For example, if the authorized individual 125 updated a list of keywords, the user devices 102, 110 may periodically check for the updated list and obtain the list from the notification server 120. Once the update is obtained, the user devices 102, 110 may store the update on the user devices 102, 110.

In still other embodiments, additional conditions may be utilized for triggering alerts. For example, changes in sentiment of the users, such as a change from the use of positive language to negative language in an email or chat session, may be used to trigger an alert. Additionally, an increase in singular references in a communication may trigger an alert. For example, increased uses of the words, "I," "me," and "mine" rather than the plural forms of these words may trigger an alert. Furthermore, the detection of a condition that indicates suspicious or negative behavior that is similar to behavior of a previously known individual that has committed fraud, theft, abuse, or other unauthorized activity, may trigger an alert. In another embodiment, certain types of user activity may have a greater weight or score than other types of user activity. For example, activity involving the use of threatening keywords may have a higher score than other keywords. The weight or score may be utilized to amplify the significance of the alert associated with the condition being monitored.

In further embodiments, the system 100 and methods may include sending metadata about the user activity and data, a frequency of the user activities, and other similar information to the notification server 120 for processing and analysis. Using such data and other data traversing in the system 100, the system 100 and methods may be utilized to compare each user against another user based on the group they are in, their job function, their demographic information, or any other user information. For example, if a user deviates outside the acceptable range for the job function they have, that user may be subjected to detail mode, further investigation, countermeasures, or a combination thereof. In yet another embodiment, upon the triggering of an alert, a notification, such as a pop-up notification, may be displayed or otherwise sent to the monitored user to advise the user that the alert has been triggered. In one embodiment, the notification may also advise the user that the device they are using will be disabled and that their user activity and data information is in the process of being harvested.

In still further embodiments, the system 100 and methods may incorporate the use of user profiles for each user that may interact with the system 100. A user profile may include alert definitions, alerts, and user activity data that are tailored to each individual user, each user's credentials, their tracked user activity data, or a combination thereof. The system 100 may utilize the user profiles when determining what mode to use with each individual and how to monitor each individual in the system 100. Additionally, alerts can be configured on a per user basis or per device basis. Alerts in recon mode can be configured on a per device basis and can apply to all users logging onto a single machine. In another embodiment, a mode may be provided that allows individual alert configuration of recon alerts on a per user basis.

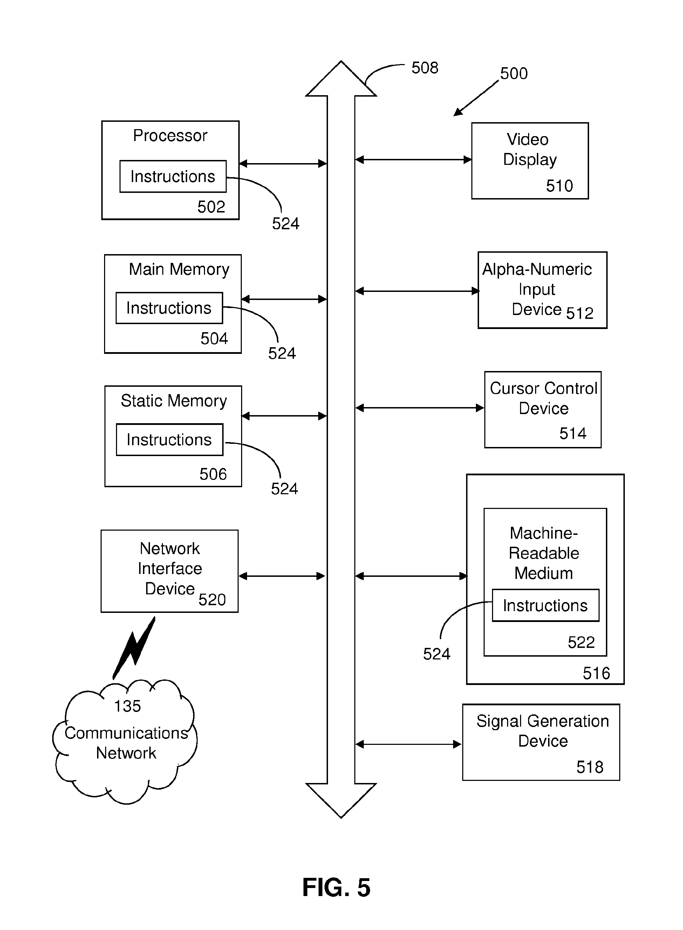

Referring now also to Figure 5, at least a portion of the methodologies and techniques described with respect to the exemplary embodiments of the system 100 can incorporate a machine, such as, but not limited to, computer system 500, or other computing device within which a set of instructions, when executed, may cause the machine to perform any one or more of the methodologies or functions discussed above. The machine may be configured to facilitate various operations conducted by the system 100. For example, the machine may be configured to, but is not limited to, assist the system 100 by providing processing power to assist with processing loads experienced in the system 100, by providing storage capacity for storing instructions or data traversing the system 100, or by assisting with any other operations conducted by or within the system 100.

In some embodiments, the machine may operate as a standalone device. In some embodiments, the machine may be connected (e.g., using communications network 135, another network, or a combination thereof) to and assist with operations performed by other machines, such as, but not limited to, monitored device 102, monitored device 110, the notification server 120, the server 140, the server 145, the server 150, the database 155, the server 160, or any combination thereof. The machine may be connected with any component in the system 100. In a networked deployment, the machine may operate in the capacity of a server or a client user machine in a server-client user network environment, or as a peer machine in a peer-to-peer (or distributed) network environment. The machine may comprise a server computer, a client user computer, a personal computer (PC), a tablet PC, a laptop computer, a desktop computer, a control system, a network router, switch or bridge, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The computer system 500 may include a processor 502 (e.g., a central processing unit (CPU), a graphics processing unit (GPU, or both), a main memory 504 and a static memory 506, which communicate with each other via a bus 508. The computer system 500 may further include a video display unit 510, which may be, but is not limited to, a liquid crystal display (LCD), a flat panel, a solid state display, or a cathode ray tube (CRT). The computer system 500 may include an input device 512, such as, but not limited to, a keyboard, a cursor control device 514, such as, but not limited to, a mouse, a disk drive unit 516, a signal generation device 518, such as, but not limited to, a speaker or remote control, and a network interface device 520.

The disk drive unit 516 may include a machine-readable medium 522 on which is stored one or more sets of instructions 524, such as, but not limited to, software embodying any one or more of the methodologies or functions described herein, including those methods illustrated above. The instructions 524 may also reside, completely or at least partially, within the main memory 504, the static memory 506, or within the processor 502, or a combination thereof, during execution thereof by the computer system 500. The main memory 504 and the processor 502 also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

The present disclosure contemplates a machine-readable medium 522 containing instructions 524 so that a device connected to the communications network 135, other network, or both, can send or receive voice, video or data, and to communicate over the communications network 135, other network, or both, using the instructions. The instructions 524 may further be transmitted or received over the communications network 135, other network, or both, via the network interface device 520.

While the machine-readable medium 522 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that causes the machine to perform any one or more of the methodologies of the present disclosure.

The terms "machine-readable medium," "machine-readable device, or "computer-readable device" shall accordingly be taken to include, but not be limited to: memory devices, solid-state memories such as a memory card or other package that houses one or more read-only (non-volatile) memories, random access memories, or other re-writable (volatile) memories; magneto-optical or optical medium such as a disk or tape; or other self-contained information archive or set of archives is considered a distribution medium equivalent to a tangible storage medium. The "machine-readable medium," "machine-readable device," or "computer-readable device" may be non-transitory, and, in certain embodiments, may not include a wave or signal per se. Accordingly, the disclosure is considered to include any one or more of a machine-readable medium or a distribution medium, as listed herein and including art-recognized equivalents and successor media, in which the software implementations herein are stored.

The illustrations of arrangements described herein are intended to provide a general understanding of the structure of various embodiments, and they are not intended to serve as a complete description of all the elements and features of apparatus and systems that might make use of the structures described herein. Other arrangements may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Thus, although specific arrangements have been illustrated and described herein, it should be appreciated that any arrangement calculated to achieve the same purpose may be substituted for the specific arrangement shown. This disclosure is intended to cover any and all adaptations or variations of various embodiments and arrangements of the invention. Combinations of the above arrangements, and other arrangements not specifically described herein, will be apparent to those of skill in the art upon reviewing the above description. Therefore, it is intended that the disclosure not be limited to the particular arrangement(s) disclosed as the best mode contemplated for carrying out this invention, but that the invention will include all embodiments and arrangements falling within the scope of the appended claims.

The foregoing is provided for purposes of illustrating, explaining, and describing embodiments of this invention. Modifications and adaptations to these embodiments will be apparent to those skilled in the art and may be made without departing from the scope or spirit of this invention. Upon reviewing the aforementioned embodiments, it would be evident to an artisan with ordinary skill in the art that said embodiments can be modified, reduced, or enhanced without departing from the scope and spirit of the claims described below.

## Claims

1. A method for providing alerts, the method comprising:
monitoring data associated with a user of a device;
capturing the data associated with the user of the device;
determining, by utilizing instructions from memory that are executed by a processor, if a portion of the data matches a condition for triggering an alert;
storing, if the portion of the data is determined to match the condition for triggering the alert, alert data associated with the portion of the data;
transmitting a notification to a client service, wherein the notification advises the client service of the triggering of the alert;
retrieving, by utilizing the client service, the alert data associated with the portion of the data; and
transmitting the alert including the alert data to a notification server for processing, wherein the alert data does not include the portion of the data that is determined to match the condition for triggering the alert.

2. The method of claim 1, further comprising not storing the alert data associated with the portion of the data if the portion of the data is determined to not match the condition for triggering the alert.

3. The method of claim 1, further comprising determining if the transmitting of the alert data was successful.

4. The method of claim 3, further comprising retransmitting, if the transmitting of the alert data is determined to not be successful, the alert data to the notification server after waiting for a predetermined amount of time.

5. The method of claim 1, further comprising transmitting a notification of the alert to the device of the user, wherein the notification is displayable via a display of the device.

6. The method of claim 1, further comprising preventing the data associated with the user device from being accessed.

7. The method of claim 1, further comprising transmitting, by utilizing the notification server, the alert including the alert data to a network administrator of a network associated with the user.

8. The method of claim 1, wherein the condition for triggering the alert is selected from the group consisting of a keyword, a behavior pattern, a sentence structure, a grammar condition, a speech pattern, a type of communication, a frequency of communication, and a combination thereof.

9. The method of claim 1, wherein the alert including the alert data comprises a time stamp, an identification of the user, a data type associated with the portion of the data, a frequency of the condition for triggering the alert, or a combination thereof.

10. A system for providing alerts, the system comprising:
a memory that stores instructions;
a processor that executes the instructions to perform operations, the operations comprising:
monitoring data associated with a user of a device;
capturing the data associated with the user of the device;
determining if a portion of the data matches a condition for triggering an alert;
storing, if the portion of the data is determined to match the condition for triggering the alert, alert data associated with the portion of the data;
transmitting a notification to a client service, wherein the notification advises the client service of the triggering of the alert;
retrieving, by utilizing the client service, the alert data associated with the portion of the data; and
transmitting the alert including the alert data to a notification server for processing, wherein the alert data does not include the portion of the data that is determined to match the condition for triggering the alert.

11. The system of claim 10, wherein the operations further comprise not storing the alert data associated with the portion of the data if the portion of the data is determined to not match the condition for triggering the alert.

12. The system of claim 10, wherein the operations further comprise determining if the transmitting of the alert data was successful.

13. The system of claim 12, wherein the operations further comprise retransmitting, if the transmitting of the alert data is determined to not be successful, the alert data to the notification server after waiting for a predetermined amount of time.

14. The system of claim 10, wherein the operations further comprise transmitting a notification of the alert to the device of the user, wherein the notification is displayable via a display of the device.

15. The system of claim 10, wherein the operations further comprise preventing the data associated with the user device from being accessed.

16. The system of claim 10, wherein the operations further comprise transmitting, by utilizing the notification server, the alert including the alert data to a network administrator of a network associated with the user.

17. The system of claim 10, wherein the condition for triggering the alert is selected from the group consisting of a keyword, a behavior pattern, a sentence structure, a grammar condition, a speech pattern, a type of communication, a frequency of communication, and a combination thereof.

18. The system of claim 10, wherein the alert including the alert data comprises a time stamp, an identification of the user, a data type associated with the portion of the data, a frequency of the condition for triggering the alert, and a combination thereof.

19. A computer-readable device comprising instructions, which when executed by a processor, cause the processor to perform operations comprising:
monitoring data associated with a user of a device;
capturing the data associated with the user of the device;
determining if a portion of the data matches a condition for triggering an alert;
storing, if the portion of the data is determined to match the condition for triggering the alert, alert data associated with the portion of the data;
transmitting a notification to a client service, wherein the notification advises the client service of the triggering of the alert;
retrieving, by utilizing the client service, the alert data associated with the portion of the data; and
transmitting the alert including the alert data to a notification server for processing, wherein the alert data does not include the portion of the data that is determined to match the condition for triggering the alert.

20. The computer-readable device of claim 19, further comprising preventing the data associated with the user device from being accessed.
